# EUROPEAN PATENT APPLICATION

(11) **EP 4 796 610 A1**
(43) Date of publication of application: **26.08.2026**
(21) Application number: 23956091.5
(22) Date of filing: 19.10.2023
(51) Int. Cl.: C09K 3/14

(54) **FRICTION MATERIAL**

(71) Applicant: Dynax Corporation, Chitose-shi, Hokkaido 066-0077 (JP)
(72) Inventor: KANDA, Koki, Chitose-shi Hokkaido 066-0077 (JP); SANO, Makoto, Chitose-shi Hokkaido 066-0077 (JP); HEISHI, Tatsuya, Chitose-shi Hokkaido 066-0077 (JP); KIMURA, Mutsuko, Chitose-shi Hokkaido 066-0077 (JP)
(74) Representative: Basck Limited
(86) International application number: PCT/JP2023/037853
(87) International publication number: WO 2025/083843

(57) **Abstract**

[Problem]

To provide a friction material capable of achieving long-term realization and stabilization of a high coefficient of friction.

[Solution]

When the friction material 10 is brought into frictional engagement with a counterpart member 20 and wears, a powder having a thickening effect on oil in a weight ratio of 20 to 90% is detached from the surface of the friction material 10 or from the vicinity thereof, and is mixed with a high-viscosity oil that is present in the vicinity and impregnated in the friction material 10, the oil having a kinematic viscosity of 3000 mm²/s or more at 40°C and 300 mm²/s or more at 100°C, thereby forming a high-viscosity film. Since the friction material 10 and the counterpart member 20 are brought into frictional engagement via the high-viscosity film, wear of the friction material 10 and the counterpart member 20 can be reduced, and a high coefficient of friction can be stably achieved over a long period of time.

## Description

### TECHNICAL FIELD

The present invention relates to a friction material that is affixed to a friction engagement surface of a friction engagement device such as a torque limiter, a shock absorber, or a clutch (hereinafter, simply referred to as "friction material").

### BACKGROUND

In recent years, friction engagement devices used in automobiles and the like have been required to exhibit high functionality, such as downsizing, long-term realization of a high coefficient of friction, stabilization of the coefficient of friction, and quietness. In order to solve these problems, improvements in friction materials have also been made, examples of which are given below.

### PRIOR ART DOCUMENTS

Patent Document 1: JP2005-97374A

### SUMMARY

The friction material disclosed in Patent Document 1 is characterized by containing a phenolic resin and mica, and by using a phenolic resin composition in which the phenolic resin and the mica are dispersed and mixed. According to this, it is said that a friction material having excellent vibration absorbability can be obtained without reducing mechanical strength.

However, with regard to the long-term realization of a high coefficient of friction and the stabilization of the coefficient of friction, the friction material of Patent Document 1 may not be able to sufficiently achieve these, and thus there remains a problem in this respect.

Accordingly, an object of the present invention is to provide a friction material capable of achieving long-term realization and stabilization of a high coefficient of friction.

The present invention has solved the above problems by providing a friction material characterized in that a base material including fibers, a resin, and a powder having a thickening effect on an oil in a weight ratio of 20 to 90% is impregnated with a high-viscosity oil having a kinematic viscosity of 3000 mm²/s or more at 40°C and 300 mm²/s or more at 100°C.

According to the present invention, when the friction material is brought into frictional engagement with a counterpart member and wears, a powder having a thickening effect on oil in a weight ratio of 20 to 90% is detached from the surface of the friction material or from the vicinity thereof, and is mixed with a high-viscosity oil that is present in the vicinity and impregnated in the friction material, the oil having a kinematic viscosity of 3000 mm²/s or more at 40°C and 300 mm²/s or more at 100°C, thereby forming a high-viscosity film. This high-viscosity film covers the friction engagement surface between the friction material and the counterpart member, and the friction material and the counterpart member are brought into frictional engagement via the high-viscosity film, whereby a high coefficient of friction can be achieved. Further, since the high-viscosity film reduces wear of the friction material and the counterpart member and continues to be formed until the friction material is worn out, a stable high coefficient of friction can be achieved over a long period of time.

The powder having a thickening effect on oil may be a clay mineral, magnesium carbonate, wollastonite, graphite, or a combination thereof.

### BRIEF DESCRIPTION OF THE DRAWINGS

[Fig. 1] A schematic cross-sectional view of a friction material according to a first embodiment of the present invention.
[Fig. 2] A graph showing the coefficient of friction of each friction material at different rotational speeds.
[Fig. 3] A schematic cross-sectional view of a friction material according to a second embodiment of the present invention.

### DETAILED DESCRIPTION OF EMBODIMENTS

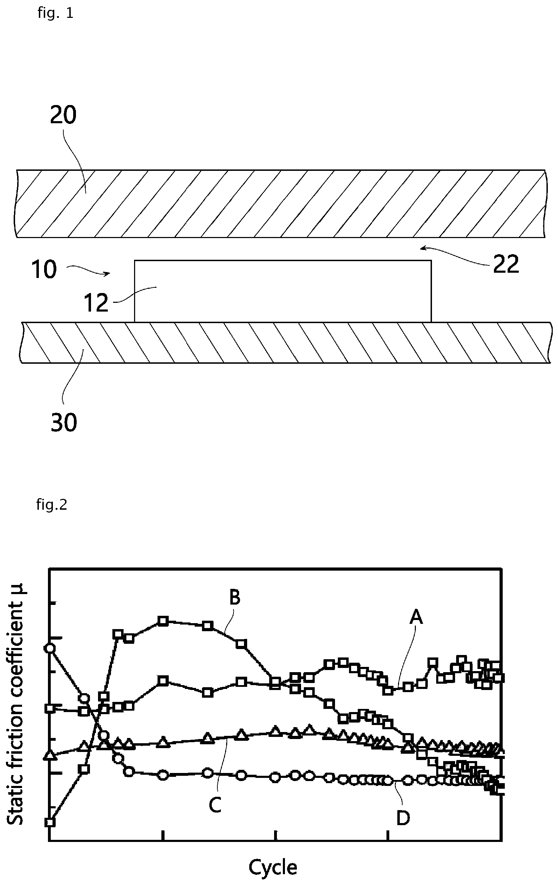

Hereinafter, embodiments of the present invention will be described with reference to Figs. 1 to 3. However, the present invention is not limited to these embodiments.

As shown in Fig. 1, a friction material **10** according to a first embodiment of the present invention is affixed to a friction engagement surface of a friction member **30** that engages with a counterpart member **20**. The friction member **30** and the counterpart member **20** may each have a plate shape, an annular shape, a columnar shape, or a cylindrical shape, and are used in friction engagement devices such as torque limiters, shock absorbers, and clutches. The friction material **10** may be formed not only in a segment shape as illustrated, but also in a configuration in which it is provided over the entire friction engagement surface of the friction member **30**, and may be provided with oil grooves (not shown).

The friction material **10** includes a base material **12**. The base material **12** is configured to include fibers, a resin, and a powder having a thickening effect on oil in a weight ratio of 20 to 90%. As the fibers, known fibers used in friction materials may be used, such as pulp, aramid fibers, glass fibers, carbon fibers, and metal fibers. As the resin, known resins used in friction materials, such as phenolic resin, may be used. As the material of the powder having a thickening effect on oil, clay minerals (including mixed-layer clay minerals; the same applies hereinafter), for example, layered silicate minerals such as kaolinite, sepiolite, attapulgite, alliete, hectorite, talc, phlogopite, and muscovite, and other materials such as magnesium carbonate, wollastonite, graphite, or a combination thereof may be used. Other materials may also be used as long as fluid molecules are adsorbed onto the powder to form a gel-like substance, thereby exhibiting a thickening effect. In particular, materials having a multilayer structure and a large surface area are preferable. The maximum particle size of the powder is preferably 200 µm or less.

The base material **12** is formed by integrating fibers, a resin, and the powder by a method such as lamination, coating, or papermaking. At this time, inorganic powder serving as a friction modifier, metal powder, carbon materials, and lubricants may also be included.

The base material **12** is further impregnated with a high-viscosity oil having a kinematic viscosity of 3000 mm²/s or more at 40°C and 300 mm²/s or more at 100°C. The high-viscosity oil preferably does not contain a thickening agent, and may be allowed to permeate throughout the entirety of the base material **12**, or may be applied to the base material **12** so as to permeate into the vicinity of the surface.

When the friction material **10** having the above configuration is brought into frictional engagement with the counterpart member **20**, the friction material **10** wears, and a powder having a thickening effect on oil in a weight ratio of 20 to 90% is detached from the surface of the friction material **10** or from the vicinity thereof. The powder is then mixed with a high-viscosity oil that is present in the vicinity of the powder and impregnated in the friction material **10**, the oil having a kinematic viscosity of 3000 mm²/s or more at 40°C and 300 mm²/s or more at 100°C, thereby forming a high-viscosity film. This high-viscosity film is formed in a space **22** between the friction material **10** and the counterpart member **20**, and covers the friction engagement surfaces of the friction material **10** and the counterpart member **20**. As a result, the friction material **10** and the counterpart member **20** are brought into frictional engagement via the high-viscosity film, whereby a high coefficient of friction can be achieved. Further, since the high-viscosity film reduces wear of the friction material **10** and the counterpart member **20** and continues to be formed until the friction material **10** is worn out, a stable high coefficient of friction can be achieved over a long period of time.

Fig. 2 is a graph showing the coefficient of friction of each friction material at different rotational cycles. The horizontal axis represents the number of cycles, and the vertical axis represents the coefficient of static friction. A indicates the above-described friction material **10**. B indicates a friction material in which a known grease having a worked penetration in the range of 100 to 500 is applied to the above-described base material **12** that is not impregnated with the high-viscosity oil. C indicates a conventional friction material, that is, a material in which the above-described high-viscosity oil is impregnated into a base material that does not contain a powder having a thickening effect, as compared with the above-described base material **12**. D indicates a conventional friction material to which a known grease having a worked penetration in the range of 100 to 500 is applied.

As shown in Fig. 2, according to A (friction material **10**), a relatively high coefficient of friction could be stably achieved even as the number of cycles increased. On the other hand, B exhibited a higher coefficient of friction than A at the initial stage of the cycles, but the coefficient of friction decreased as the number of cycles increased, resulting in a value lower than that of A, and thus a stable high coefficient of friction could not be achieved. C exhibited a substantially constant and stable coefficient of friction, but the coefficient of friction was lower than that of A. D exhibited a higher coefficient of friction than A at the initial stage of the cycles, but the coefficient of friction decreased as the number of cycles increased, resulting in a coefficient of friction lower than that of C. Accordingly, it was found that the friction material **10** can achieve long-term realization and stabilization of a high coefficient of friction as compared with other configurations.

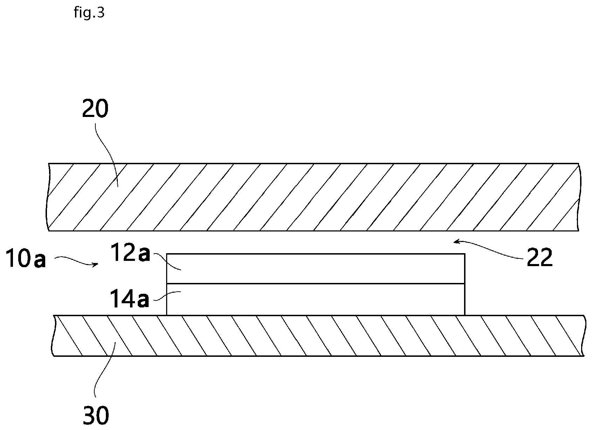

Fig. 3 shows a friction material **10a** according to a second embodiment of the present invention. As shown in Fig. 3, the friction material **10a** includes a base material **12a** having the same configuration as the base material **12** of the above-described friction material **10**, and further includes a friction material layer **14a** between the base material **12a** and the friction member **30**. The friction material layer **14a** is a conventional friction material, that is, it does not contain a powder having a thickening effect as compared with the base material **12a**. Thus, the base material **12a** does not need to constitute the entirety of the friction material **10**, and a certain effect can be achieved as long as the base material is included in at least a part of the friction material. That is, although illustration is omitted, the base material of the present invention may be configured not only to be exposed at the friction engagement surface with the counterpart member **20** as in the friction materials **10** and **10a**, but also to be sandwiched between conventional friction materials so that the base material is exposed after the conventional friction materials are worn.

As described above, according to the present invention, it is possible to provide a friction material capable of achieving long-term realization and stabilization of a high coefficient of friction.

### DESCRIPTION OF REFERENCE NUMBERS

10, 10a Friction material
12, 12a Base material
20 Counterpart member
30 Friction member

## Claims

1. A friction material,
wherein a base material including fibers, a resin, and a powder having a thickening effect on oil in a weight ratio of 20 to 90% is impregnated with a high-viscosity oil having a kinematic viscosity of 3000 mm²/s or more at 40°C and 300 mm²/s or more at 100°C.

2. The friction material according to claim 1,
wherein the powder is made of a material selected from a clay mineral, magnesium carbonate, wollastonite, graphite, or a combination thereof.
